# FASCICULE DE BREVET EUROPEEN

(11) **EP 3 162 671 B1**
(45) Date de publication et mention de la délivrance du brevet: **20.06.2018**
(21) Numéro de dépôt: 16196087.7
(22) Date de dépôt: 27.10.2016
(51) Int. Cl.: B62D 25/14, B62D 29/00

(54) **TRAVERSE DE VEHICULE**
FAHRZEUG-QUERTRÄGER
VEHICLE CROSSMEMBER

(30) Priorité: 29.10.2015 FR 1560395
(43) Date de publication de la demande: 03.05.2017
(73) Titulaire: Faurecia Intérieur Industrie, 92000 Nanterre (FR)
(72) Inventeur: TRANNOY, Mickaël, 60730 CAUVIGNY (FR); BAUDART, Laurent, 60530 FRESNOY EN THELLE (FR)
(74) Mandataire: Cabinet Plasseraud

(56) Documents cités:
- EP-A1- 1 731 410
- EP-A1- 1 731 411
- DE-A1-102011 101 581
- DE-A1-102013 218 353
- JP-A- 2001 253 368
- US-A1- 2013 057 026

## Description

La présente invention est relative aux traverses de véhicule, notamment aux traverses de planche de bord de véhicule automobile. Plus particulièrement, la présente invention est relative aux traverses de planche de bord de véhicule comprenant au moins deux portions réalisées dans deux matériaux différents et à l'assemblage de telles portions.

On connait déjà une traverse de planche de bord de véhicule s'étendant sensiblement selon une direction longitudinale et comportant :
- une première portion de traverse, réalisée dans un premier matériau, la première portion de traverse s'étendant sensiblement selon la direction longitudinale et comportant une section transversale perpendiculaire à la direction longitudinale fermée, la première portion de traverse comprenant une extrémité de jonction creuse,
- une deuxième portion de traverse réalisée dans un deuxième matériau, le premier matériau étant différent du deuxième matériau.

L'utilisation de deux matériaux différents pour réaliser une traverse de véhicule peut notamment permettre de gagner en masse.

Le document DE102011101581 décrit un exemple de traverse comprenant une première portion réalisée dans un premier matériau et une deuxième portion, réalisée dans un deuxième matériau, les premier et deuxième matériaux étant différents. La première et la deuxième portion sont reliées l'une à l'autre par l'intermédiaire d'un raccord emmanché d'une part dans la première portion et d'autre part dans la deuxième portion. Ce raccord est emmanché par force dans la première portion pour y être solidarisé ou encore est solidarisé par rivetage. Ce raccord est également emmanché dans la deuxième portion et un cordon de soudure est prévu pour solidarisé la deuxième portion et le raccord. Ainsi, l'assemblage des première et deuxième portions est réalisé par l'intermédiaire d'une troisième pièce. Cette troisième pièce entraîne un processus industriel plus compliqué à mettre en oeuvre. En outre, la fixation prévue de cette troisième pièce peut, selon les types de matériaux utilisés pour les première et deuxième portions, ne pas être assez résistante ou robuste, ce qui peut poser des problèmes de sécurité. Aussi, dans un souci de réaliser une traverse peu lourde, en conservant des caractéristiques mécaniques de rigidité et de robustesse intéressantes tout en évitant d'alourdir le processus industriel, la présente invention vise à améliorer l'existant.

A cet effet, selon l'invention, une traverse du genre en question est caractérisée en ce que la deuxième portion de traverse comporte une partie principale s'étendant sensiblement selon la direction longitudinale, et une partie de jonction emmanchée dans l'extrémité de jonction de la première portion de traverse et solidarisée à cette extrémité de jonction, la partie principale et la partie de jonction forment une pièce monobloc, la partie principale comporte une section transversale perpendiculaire à la direction longitudinale ouverte adaptée pour être démoulée selon une direction de démoulage perpendiculaire à la direction longitudinale lors de la fabrication de la deuxième portion de traverse, et en ce que la partie de jonction comporte une section transversale perpendiculaire à la direction longitudinale fermée creuse adaptée pour être démoulée selon la direction longitudinale lors de la fabrication de la deuxième portion de traverse.

Grâce à ces dispositions, on est capable de réaliser une traverse en deux parties avec deux matériaux différents qui peuvent être assemblés de façon robuste. Par exemple, il est possible de réaliser la deuxième portion de traverse avec un matériau composite, et la section ouverte de la deuxième portion de traverse simplifie le procédé de fabrication de la deuxième portion de traverse, notamment lorsque celle-ci est réalisée en un matériau composite, en permettant une fabrication avec un démoulage facile. Ainsi, on est capable de diminuer la masse de la traverse (grâce à la présence d'une deuxième partie dans un deuxième matériau) sans toutefois modifier les caractéristiques mécaniques d'une telle traverse par rapport à une traverse classique monobloc réalisée dans un seul et unique matériau.

Dans des modes de réalisation préférés de l'invention, on peut éventuellement avoir recours en outre à l'une et/ou à l'autre des dispositions suivantes :
- la première portion de traverse est réalisée dans un matériau métallique ; par exemple la première portion de traverse est réalisée en acier, en aluminium ou en un alliage métallique ;
- la deuxième portion de traverse est réalisée dans un matériau composite ; par exemple la deuxième portion est réalisée dans un matériau thermoplastique ;
- une collerette est prévue entre la partie de jonction et la partie principale ;
- la collerette comporte une première surface orientée vers la partie de jonction et la première portion de traverse et une deuxième surface orientée vers la partie principale ;
- la première surface de la collerette est adaptée pour former butée de l'extrémité de jonction de la première portion de traverse selon la direction longitudinale ; la collerette forme alors butée pour l'assemblage mais également en cas de choc selon la direction longitudinale Y ;
- la partie de jonction comporte une surface extérieure orientée vers l'extrémité de jonction de la première traverse, l'extrémité de jonction de la première portion de traverse comporte une surface intérieure orientée vers la partie de jonction, et la surface extérieure de la partie de jonction est rugueuse de sorte à accrocher la surface intérieure de l'extrémité de jonction ;
- la première portion de traverse comporte une première extrémité de traverse destinée à être située à proximité ou en regard d'un siège conducteur du véhicule ;
- la deuxième portion de traverse comporte une deuxième extrémité de traverse destinée à être située à proximité ou en regard d'un siège passager du véhicule ;
- la première portion de traverse s'étend selon la direction longitudinale sur une distance comprise entre 300 et 500 millimètres ;
- la deuxième portion de traverse s'étend selon la direction longitudinale sur une distance comprise entre 500 et 900 millimètres ;
- la partie de jonction s'étend selon la direction longitudinale selon une distance comprise entre 20 et 100 millimètres ;
- la partie de jonction comporte une forme conique, la base du cône de plus faible diamètre étant orientée vers la partie principale ;
- l'extrémité de jonction de la première portion de traverse est sertie sur la forme conique de la partie de jonction ;
- la partie de jonction est cylindrique ;
- des gorges d'accroché sont prévues sur la surface extérieure de la partie de jonction ;
- la collerette s'étend selon un plan de collerette ayant pour normale la direction longitudinale ;
- un joint de colle est disposé entre l'extrémité de jonction et la partie de jonction.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue de face d'une traverse de véhicule selon l'invention à l'état assemblé;
- la figure 2 est une vue de face de la traverse de la figure 1 à l'état désassemblé ;
- la figure 3 est une vue en perspective de la partie de jonction de la deuxième portion de la traverse et d'une partie de la partie principale ;
- la figure 4 est une vue en perspective de la partie de jonction de la figure 3 et de l'extrémité de jonction de la première portion de la traverse ;
- les figures 5 et 6 sont des vues schématiques de la jonction entre la partie de jonction et l'extrémité de jonction selon deux modes de réalisation de la partie de jonction différents.

Sur les différentes figures, les mêmes références désignent des éléments identiques ou similaires.

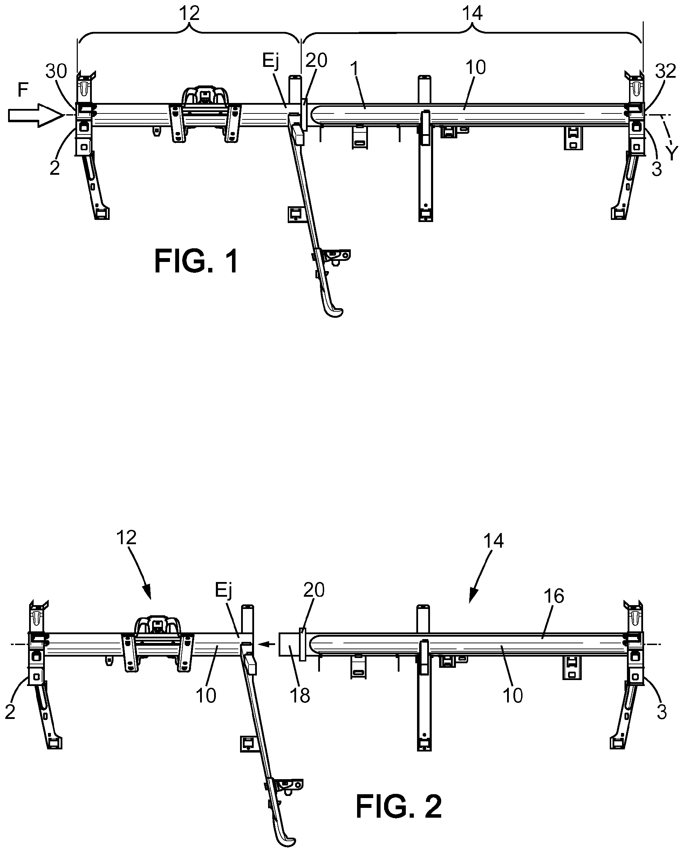

La traverse 1 de planche de bord de véhicule automobile telle que représentée sur la figure 1 est destinée à être fixée transversalement entre les montants latéraux avant, ou montants « A » d'une structure de caisse de véhicule (encore appelée châssis). Elle a notamment pour fonctions de rigidifier la structure du véhicule et de supporter des équipements fonctionnels du véhicule tels qu'une colonne de direction, un système de ventilation de chauffage et de climatisation, ou encore un autoradio. La traverse 1 comporte un tube de traverse 100 s'étendant selon une direction longitudinale Y. Le tube de traverse 100 est relié à la structure de caisse (ou châssis) du véhicule par l'intermédiaire d'un étrier de montage conducteur 2. Plus précisément, une des extrémités du tube de traverse est fixée sur l'étrier de montage conducteur 2 qui lui-même est destiné à être fixé sur la structure de caisse du véhicule du côté du siège du conducteur du véhicule. De façon similaire, la deuxième extrémité du tube de traverse 10 est reliée à la structure de caisse du véhicule par l'intermédiaire d'un étrier de montage passager 3. Plus précisément, la deuxième extrémité du tube de traverse est fixée sur l'étrier de montage passager qui lui-même est destiné à être fixé sur la structure de caisse du véhicule du côté du siège du passager du véhicule situé dans la direction transversale à côté du siège du conducteur.

La traverse 1 comporte une première extrémité 30 selon la direction longitudinale Y destinée à être orientée vers le siège conducteur et une deuxième extrémité 32 selon la direction longitudinale Y destinée à être orientée vers le siège passager.

La traverse 1 comporte une première portion 12, réalisée dans un premier matériau et une deuxième portion 14 réalisée dans un deuxième matériau. Les premier et deuxième matériaux sont différents.

Par exemple, la première portion 12 de la traverse 1 est localisée vers le siège du conducteur du véhicule et la deuxième portion 14 de traverse 1 est localisée vers le siège du passager du véhicule. Dans ce cas, la première portion 12 de la traverse 1 est particulièrement sollicitée par rapport à la deuxième portion 14 de la traverse 1. En effet, la colonne de direction du véhicule, entre autres, est fixée sur la zone de la traverse 1 localisée vers le siège du conducteur et sollicite particulièrement cette zone.

Le matériau de la première portion 12 peut être un matériau métallique. Par exemple la première portion 12 est réalisée en acier, en aluminium, en magnésium ou autres matériaux métalliques.

La première portion 12 de la traverse 1 s'étend sensiblement selon la direction longitudinale Y. La première portion 12 de la traverse 1 comporte une section transversale, perpendiculaire à la section longitudinale, qui est fermée. Par exemple la première portion 12 de traverse 1 comporte une section transversale circulaire (ou en O). La section transversale de la première portion 12 peut également être ovale ou rectangulaire ou encore triangulaire. Le matériau de la première portion 12 de traverse 1 permet à celle-ci d'être facilement démoulée même avec une section transversale fermée. La première portion 12 de traverse 1 est par exemple du côté du conducteur du véhicule. La première portion 12 de traverse 1 peut comprendre une partie du tube de traverse 10 et l'étrier côté conducteur. Dans une variante de réalisation, la première portion 12 de traverse 1 peut comprendre uniquement une portion du tube de traverse 10. Dans l'exemple de réalisation illustré sur la figure 2, la première portion 12 de traverse 1 comporte l'étrier côté conducteur et la portion du tube de traverse 10 en regard du siège du conducteur.

Tel qu'illustré sur la figure 2, la première portion 12 de traverse 1 comporte une extrémité de jonction Ej située à l'opposé de l'étrier côté conducteur 2. L'extrémité de jonction Ej de la première portion 12 est creuse et a des dimensions telles qu'elle est adaptée pour permettre à la deuxième portion 14 de traverse 1 d'être en partie emmanchée dans l'extrémité de jonction Ej de la première portion 12 de traverse 1.

La deuxième portion 14 de traverse 1 est, comme précédemment mentionné, réalisée dans un deuxième matériau, différent du premier matériau. Le deuxième matériau est un matériau composite. Par exemple le deuxième matériau est par exemple un matériau thermoplastique, thermodurcissable ou un matériau chargé renforcé. Par exemple, le deuxième matériau peut comporter à la fois des fibres de verre et de carbone. Le deuxième matériau comprend une masse volumique plus faible que celle du premier matériau et permet ainsi de réaliser une traverse 1 de planche de bord plus légère qu'une traverse qui serait réalisée uniquement avec le premier matériau.

La deuxième portion 14 de traverse 1 comporte au moins une zone qui s'étend sensiblement selon la direction longitudinale Y.

Par exemple, tel qu'illustré sur la figure 2, la deuxième portion 14 de traverse 1 comprend l'étrier de montage côté passager 3 et une portion du tube de traverse 10. Dans d'autres variantes de l'invention, la deuxième portion 14 de traverse 1 peut comprendre uniquement une zone du tube de traverse 10, ou encore une zone du tube de traverse 10 et l'étrier de montage côté conducteur. La deuxième portion 14 de traverse 1 comporte une partie principale 16 et une partie de jonction 18. La partie de jonction 18 est dirigée vers l'extrémité de jonction Ej de la première portion 12 de traverse 1 et est emmanchée dans celle-ci. La partie principale 16 comporte une section transversale, perpendiculaire à la direction longitudinale, qui est ouverte. La section transversale de la partie principale 16 est ouverte de telle sorte qu'elle puisse être démoulée facilement. Plus précisément, la partie principale 16 de la deuxième portion 14 de traverse 1 comporte une section transversale ouverte adaptée pour être démoulée selon une direction de démoulage perpendiculaire à la direction longitudinale Y lors de la fabrication de la deuxième portion 14 de traverse 1.

Par exemple, dans l'exemple illustré sur la figure 2, la partie principale 16 comporte une longueur de l'ordre de 500 à 900 millimètres ou encore entre 600 et 800 millimètres selon la direction longitudinale Y. La section ouverte de la partie principale 16 permet de réaliser la deuxième portion 14 de traverse 1 autrement qu'en démoulant la partie principale 16 selon la direction longitudinale Y, ce qui demande une grande course d'éjection. En effet, dans le cas d'une section transversale fermée, l'éjection est forcément selon la direction longitudinale Y et pour certains matériaux, tels que les matériaux composite, le démoulage de telles pièces pose problème. En d'autres termes, la partie principale 16 comporte une section transversale ouverte dont les flancs 34 présentent chacun un chant 36. La distance entre les flancs est maximale au niveau des flancs 34 et le plan de joint Pj de la partie principale 16 est à équidistance des deux chants, la distance entre les flancs de la section diminuant de proche en proche jusqu'à ce que les deux flancs se rencontrent au niveau du plan de joint Pj. La partie principale 16 est monobloc avec la partie de jonction 18.

La partie de jonction 18 présente une section transversale, perpendiculaire à la direction longitudinale Y. La partie de jonction 18 est creuse. La partie de jonction 18 est adaptée pour être démoulée selon la direction longitudinale Y lors de la fabrication de la deuxième portion 14 de traverse 1. Par exemple, la partie de jonction 18 s'étend selon la direction longitudinale Y sur une distance de l'ordre de 70 à 100 millimètres. Sur cette distance, le démoulage selon la direction Y ne pose pas de problème. La section fermée de la partie de jonction 18 assure une meilleure solidarisation de la partie de jonction 18 avec l'extrémité de jonction Ej.

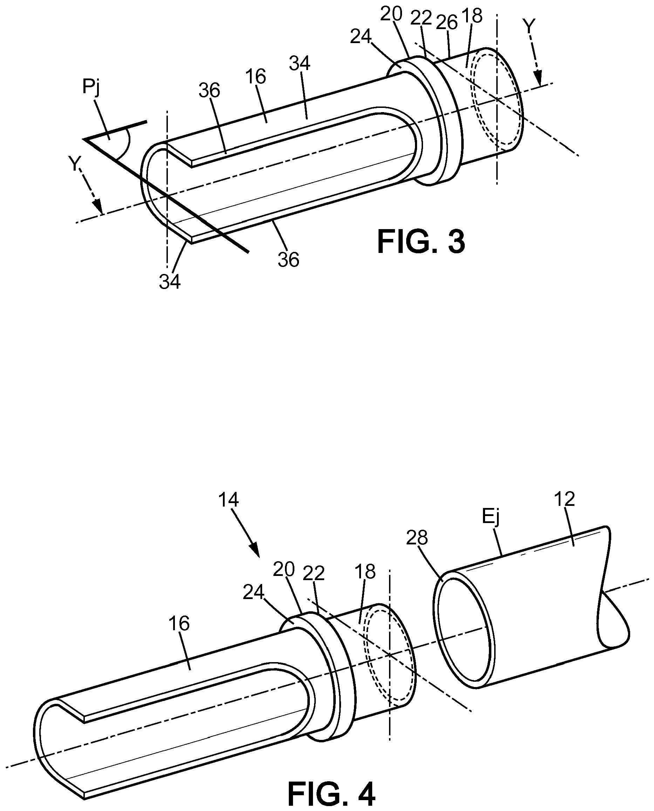

En l'occurrence, la deuxième portion 14 de traverse 1 comporte une rupture de section (ou encore un changement ou rupture d'inertie) pour permettre d'une part à cette deuxième portion 14 d'être démoulée et d'autre part, à cette deuxième portion 14 d'être emmanché et solidarisée à la première portion 12 de façon sure et robuste. Cette rupture de section est plus particulièrement visible sur la figure 3 ou la figure 4. Tel qu'illustré la deuxième portion 14 comporte d'une part une section transversale en U (section transversale du côté de la partie principale 16) et d'autre part une section transversale en O (section transversale du côté de la partie de jonction 18). Dans des variantes de réalisation d'autres formes de sections transversales ouvertes ou fermées peuvent être prévues.

Tel que visible sur la figure 3 ou 4, la partie principale 16 et la partie de jonction 18 sont séparées l'une de l'autre par une collerette 20. Cette collerette 20 peut s'étendre radialement selon un plan sensiblement perpendiculaire à la direction longitudinale. Dans des variantes de réalisation, la collerette 20 peut s'étendre selon un plan formant un angle non droit avec la direction longitudinale Y. La collerette 20 est telle que représentée sur la figure 3 de forme circulaire. Toutefois, dans des variantes de réalisation, la collerette 20 peut comprendre une forme non circulaire, par exemple carrée ou encore ovale. La collerette 20 peut être continue, comme illustré sur la figure 3, ou encore être non continue. Si la collerette 20 est non continue, des ergots font saillit de la partie intermédiaire située entre la partie de jonction 18 et la partie principale 16.

La collerette 20, lors d'un choc latéral sur la caisse du véhicule, notamment selon la direction longitudinale Y va permettre notamment d'absorber une partie du choc (notamment sans risque de flambage du tube de traverse 10 10, et par conséquent d'intrusion brusque de celle-ci dans l'habitacle du véhicule).

La collerette 20 comporte une première surface orientée vers la partie de jonction 18 et une deuxième surface orientée vers la première portion 12. La deuxième surface forme une surface de butée de l'interface de jonction en cas d'effort selon la direction longitudinale Y. La deuxième surface sert également de butée de mise en position mais également lors du montage de la partie de jonction 18 de la deuxième portion 14 dans la première portion 12.

La partie de jonction 18 comporte une surface extérieure, orientée vers la première portion 12 et une surface intérieure, opposée à la surface extérieure. La surface extérieure peut être lisse mais afin d'améliorer la liaison entre la partie de jonction 18 et la première portion 12, la surface extérieure peut présenter un état de surface rugueux qui peut être obtenu par exemple par crantage, rayures ou encore moletage de la surface extérieure de la partie de jonction 18. La surface extérieure peut également comprendre des gorges d'accroche.

Il est possible de solidariser la partie de jonction 18 et la première portion 12 par déformation plastique de la première portion 12, ou en l'occurrence par déformation plastique de l'extrémité de jonction Ej de la première portion 12.

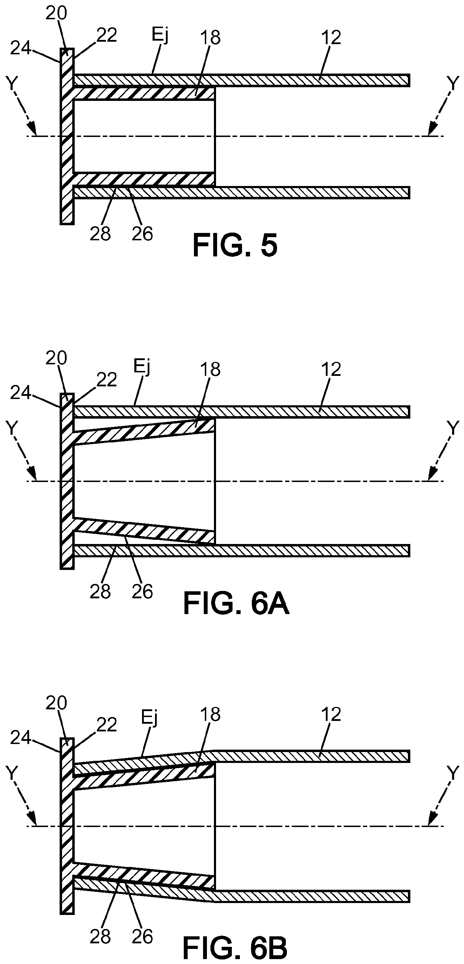

La partie de jonction 18 peut comprendre une forme tronconique avec la base de plus petit diamètre orientée vers la partie principale 16. La première portion 12 est alors sensiblement cylindrique, comme illustré sur la figure 6. La partie de jonction 18 est emmanchée dans la première portion 12, la base de plus grand diamètre vient alors affleurer la surface intérieure de la première portion 12. La génératrice du cône de la partie de jonction 18 peut par exemple former avec la direction longitudinale Y un angle de l'ordre de 5° minimum. Cet angle permet d'améliorer l'encastrement entre la partie de jonction 18 et la première portion 12. Il peut y avoir un jeu avant montage entre la surface intérieure de la première portion 12 et la surface extérieure de la partie de jonction 18 au niveau de sa base de plus grand diamètre. Par exemple le jeu avant montage peut être au minimum de 0,2 millimètres. L'extrémité de jonction Ej s'étend selon la direction longitudinale Y selon une distance de 20 millimètres au minimum.

Dans un autre mode de réalisation, schématisé figure 5, la partie de jonction 18 est cylindrique et vient s'emmancher dans l'extrémité de jonction Ej de la première portion 12 qui est, elle aussi, cylindrique. Dans ce cas la surface extérieure de la partie de jonction 18 peut comporter des gorges d'accrochés. Les gorges d'accrochés permettent de renforcer la liaison mécanique entre les première et deuxième portions 12,14. En outre, un joint de colle peut être prévu entre les première et deuxième portions 12, 14 au niveau de leur jonction. Dans des variantes de réalisation, il peut être prévu des orifices au niveau de la jonction pour permettre une injection de matière et venir améliorer la solidarisation des première et deuxième portions 12, 14.

Dans une variante de réalisation non illustrée, la traverse 1 peut comporter en outre une troisième portion. Par exemple, la troisième portion peut être un des étriers de montage, la deuxième portion 14, une partie du tube de traverse 10 et la troisième portion l'autre étrier de montage et une partie du tube de traverse 10. Dans cette variante de réalisation, la première portion 12 et la deuxième portion 14 sont réalisées à l'aide du même matériau ou d'un matériau similaires. Par exemple, les première et troisième portions sont métalliques.

## Revendications

1. Traverse (1) de planche de bord de véhicule s'étendant sensiblement selon une direction longitudinale (Y) et comportant :
- une première portion (12), réalisée dans un premier matériau,
la première portion (12) de la traverse (1) s'étendant sensiblement selon la direction longitudinale (Y) et comportant une section transversale perpendiculaire à la direction longitudinale (Y) fermée, la première portion (12) de traverse (1) comprenant une extrémité de jonction (Ej) creuse,
- une deuxième portion (14) réalisée dans un deuxième matériau, le premier matériau étant différent du deuxième matériau,
**caractérisé en ce que**
la deuxième portion (14) de la traverse (1) comporte :
- une partie principale (16) s'étendant sensiblement selon la direction longitudinale (Y), et
- une partie de jonction (18) emmanchée dans l'extrémité de jonction (Ej) de la première portion (12) de traverse (1) et solidarisée à cette extrémité de jonction (Ej), la partie principale (16) et la partie de jonction (18) formant une pièce monobloc,
**en ce que**
la partie principale (16) comporte une section transversale perpendiculaire à la direction longitudinale (Y) ouverte adaptée pour être démoulée selon une direction de démoulage perpendiculaire à la direction longitudinale (Y) lors de la fabrication de la deuxième portion (14) de traverse (1), et
**en ce que**
la partie de jonction (18) comporte une section transversale perpendiculaire à la direction longitudinale (Y) fermée creuse adaptée pour être démoulée selon la direction longitudinale (Y) lors de la fabrication de la deuxième portion (14) de traverse (1).

2. Traverse (1) de planche de bord selon la revendication 1, dans laquelle la première portion (12) de traverse (1) est réalisée dans un matériau métallique et la deuxième portion (14) de traverse (1) est réalisée dans un matériau composite.

3. Traverse (1) de planche de bord selon l'une des revendications 1 et 2, dans laquelle une collerette (20) est prévue entre la partie de jonction (18) et la partie principale (16), ladite collerette (20) comportant une première surface (22) orientée vers la partie de jonction (18) et la première portion (12) de traverse (1) et une deuxième surface (24) orientée vers la partie principale (16), et dans laquelle la première surface de la collerette (20) est adaptée pour former butée de l'extrémité de jonction (Ej) de la première portion (12) de traverse (1) selon la direction longitudinale (Y).

4. Traverse (1) selon l'une quelconque des revendications précédentes, dans laquelle
- la partie de jonction (18) comporte une surface extérieure (26) orientée vers l'extrémité de jonction (Ej) de la première traverse (1),
- l'extrémité de jonction (Ej) de la première portion (12) de traverse (1) comporte une surface intérieure (28) orientée vers la partie de jonction (18), et
dans laquelle la surface extérieure de la partie de jonction (18) est rugueuse de sorte à accrocher la surface intérieure de l'extrémité de jonction (Ej).

5. Traverse (1) selon l'une quelconque des revendications précédentes, dans laquelle la première portion (12) de traverse (1) comporte une première extrémité de traverse (1) destinée à être située en regard d'un siège conducteur du véhicule, et dans laquelle la deuxième portion (14) de traverse (1) comporte une deuxième extrémité de traverse (1) destinée à être située en regard d'un siège passager du véhicule.

6. Traverse (1) selon l'une quelconque des revendications précédentes, dans laquelle la première portion (12) de traverse (1) s'étend selon la direction longitudinale (Y) sur une distance comprise entre 300 et 500 millimètres, dans laquelle la deuxième portion (14) de traverse (1) s'étend selon la direction longitudinale (Y) sur une distance comprise entre 500 et 900 millimètres, et dans laquelle la partie de jonction (18) s'étend selon la direction longitudinale (Y) selon une distance comprise entre 20 et 100 millimètres.

7. Traverse (1) selon l'une quelconque des revendications précédentes, dans laquelle la partie de jonction comporte une forme conique, la base du cône de plus faible diamètre étant orientée vers la partie principale (16), et dans laquelle l'extrémité de jonction (Ej) de la première portion (12) de traverse (1) est sertie sur la forme conique de la partie de jonction (18).

8. Traverse (1) selon l'une quelconque des revendications 1 à 6, dans laquelle la partie de jonction (18) est cylindrique, et dans laquelle des gorges d'accroché sont prévues sur la surface extérieure de la partie de jonction.

9. Traverse (1) selon l'une quelconque des revendications précédentes, dans laquelle la collerette (20) s'étend selon un plan de collerette (20) ayant pour normale la direction longitudinale (Y).

10. Traverse (1) selon l'une quelconque des revendications précédentes, dans laquelle un joint de colle est disposé entre l'extrémité de jonction (Ej) et la partie de jonction (18).

## Patentansprüche

1. Querstrebe (1) eines Armaturenbretts eines Fahrzeugs, welche sich im Wesentlichen entlang einer longitudinalen Richtung (Y) erstreckt und umfasst:
- einen ersten Abschnitt (12), welcher aus einem ersten Material gebildet ist, wobei sich der erste Abschnitt (12) der Querstrebe (1) im Wesentlichen entlang der longitudinalen Richtung (Y) erstreckt und einen geschlossenen Querschnitt transversal senkrecht zu der longitudinalen Richtung (Y) umfasst, wobei der erste Abschnitt (12) der Querstrebe (1) ein hohles Verbindungsende (Ej) umfasst,
- einen zweiten Abschnitt (14), welcher aus einem zweiten Material gebildet ist, wobei das erste Material verschieden von dem zweiten Material ist,
**dadurch gekennzeichnet, dass**
der zweite Abschnitt (14) der Querstrebe (1) umfasst:
- einen Hauptteil (16), welcher sich im Wesentlichen entlang der longitudinalen Richtung (Y) erstreckt, und
- einen Verbindungsteil (18), welcher in das Verbindungsende (Ej) des ersten Abschnitts (12) der Querstrebe (1) eingepasst und mit diesem Verbindungsende (Ej) verbunden ist, wobei der Hauptteil (16) und der Verbindungsteil (18) ein einzelnes Stück bilden,
und dadurch, dass
der Hauptteil (16) einen offenen Querschnitt transversal senkrecht zu der longitudinalen Richtung (Y) umfasst, welcher dazu eingerichtet ist, entlang einer Entformungsrichtung senkrecht zu der longitudinalen Richtung (Y) während der Herstellung des zweiten Abschnitts (14) der Querstrebe (1) entformt zu werden, und dadurch, dass
der Verbindungsteil (18) einen geschlossenen hohlen Querschnitt transversal senkrecht zu der longitudinalen Richtung (Y) umfasst, welcher dazu eingerichtet ist, entlang der longitudinalen Richtung (Y) während des Herstellens des zweiten Abschnitts (14) der Querstrebe (1) entformt zu werden.

2. Querstrebe (1) eines Armaturenbretts nach Anspruch 1, wobei der erste Abschnitt (12) der Querstrebe (1) aus einem metallischen Material gebildet ist und der zweite Abschnitt (14) der Querstrebe (1) aus einem Verbundmaterial gebildet ist.

3. Querstrebe (1) eines Armaturenbretts nach einem der Ansprüche 1 und 2, wobei ein Kragen (20) zwischen dem Verbindungsteil (18) und dem Hauptteil (16) vorgesehen ist, wobei der Kragen (20) eine erste Fläche (22), welche in Richtung des Verbindungsteils (18) und des ersten Abschnitts (12) der Querstrebe (1) orientiert ist, und eine zweite Fläche (24) umfasst, welche in Richtung des Hauptteils (16) orientiert ist, und wobei die erste Fläche des Kragens (20) dazu eingerichtet ist, eine Anlage für das Verbindungsende (Ej) des ersten Abschnitts (12) der Querstrebe (1) entlang der longitudinalen Richtung (Y) zu bilden.

4. Querstrebe (1) nach einem der vorhergehenden Ansprüche, wobei
- der Verbindungsteil (18) eine äußere Fläche (26) umfasst, welche in Richtung des Verbindungsendes (Ej) der ersten Querstrebe (1) orientiert ist,
- das Verbindungsende (Ej) des ersten Abschnitts (12) der Querstrebe (1) eine innere Fläche (28) umfasst, welche in Richtung des Verbindungsteils (18) orientiert ist, und
wobei die äußere Fläche des Verbindungsteils (18) angeraut ist, um die innere Fläche des Verbindungsendes (Ej) zu greifen.

5. Querstrebe (1) nach einem der vorhergehenden Ansprüche, wobei der erste Abschnitt (12) der Querstrebe (1) ein erstes Ende der Querstrebe (1) umfasst, welches dazu vorgesehen ist, gegenüber einem Fahrersitz des Fahrzeugs platziert zu sein, und wobei der zweite Abschnitt (14) der Querstrebe (1) ein zweites Ende der Querstrebe (1) umfasst, welches dazu vorgesehen ist, gegenüber einem Beifahrersitz des Fahrzeugs platziert zu sein.

6. Querstrebe (1) nach einem der vorhergehenden Ansprüche, wobei sich der erste Abschnitt (12) der Querstrebe (1) entlang der longitudinalen Richtung (Y) um eine Distanz erstreckt, welche zwischen 300 und 500 Millimeter beträgt, wobei sich der zweite Abschnitt (14) der Querstrebe (1) entlang der longitudinalen Richtung (Y) um eine Distanz erstreckt, welche zwischen 500 und 900 Millimeter beträgt, und wobei sich der Verbindungsteil (18) entlang der longitudinalen Richtung (Y) entlang einer Distanz erstreckt, welche zwischen 20 und 100 Millimeter beträgt.

7. Querstrebe (1) nach einem der vorhergehenden Ansprüche, wobei der Verbindungsteil eine konische Form umfasst, wobei die Grundfläche des Konus mit kleinerem Durchmesser in Richtung des Hauptteils (16) orientiert ist, und wobei das Verbindungsende (Ej) des ersten Abschnitts (12) der Querstrebe (1) auf die konische Form des Verbindungsteils (18) eingefasst ist.

8. Querstrebe (1) nach einem der Ansprüche 1 bis 6, wobei der Verbindungsteil (18) zylindrisch ist, und wobei Kopplungsvertiefungen an der äußeren Fläche des Verbindungsabschnitts vorgesehen sind.

9. Querstrebe (1) nach einem der vorhergehenden Ansprüche, wobei sich der Kragen (20) entlang einer Kragenebene (20) erstreckt, welche als Normale die longitudinale Richtung (Y) aufweist.

10. Querstrebe (1) nach einem der vorhergehenden Ansprüche, wobei eine Klebeverbindung zwischen dem Verbindungsende (Ej) und dem Verbindungsteil (18) angeordnet ist.

## Claims

1. Crossbar (1) for vehicle dashboard extending substantially along a longitudinal direction (Y) and comprising:
- a first portion (12), made of a first material,
the first portion (12) of the crossbar (1) extending substantially along the longitudinal direction (Y) and comprising a cross-section perpendicular to the closed longitudinal direction (Y), the first portion (12) of the crossbar (1) comprising a hollow joining end (Ej),
- a second portion (14) made from a second material, the first material being different from the second material,
**characterised in that**
the second portion (14) of the crossbar (1) comprises:
- a main part (16) extending substantially along the longitudinal direction (Y), and
- a joining part (18) fitted into the joining end (Ej) of the first portion (12) of the crossbar (1) and secured to this joining end (Ej), the main part (16) and the joining part (18) forming a one-piece part,
**in that**
the main part (16) comprises a cross-section perpendicular to the open longitudinal direction (Y) adapted to be stripped along a stripping direction perpendicular to the longitudinal direction (Y) during the production of the second portion (14) of the crossbar (1), and
**in that**
the joining part (18) comprises a cross-section perpendicular to the closed, hollow longitudinal direction (Y), adapted to be stripped along the longitudinal direction (Y) during the production of the second portion (14) of the crossbar (1).

2. Dashboard crossbar (1) according to claim 1, wherein the first portion (12) of the crossbar (1) is made of a metal material and the second portion (14) of the crossbar (1) is made of a composite material.

3. Dashboard crossbar (1) according to one of claims 1 and 2, wherein a collar (20) is provided between the joining part (18) and the main part (16), said collar (20) comprising a first surface (22) oriented towards the joining part (18) and the first portion (12) of the crossbar (1) and a second surface (24) oriented towards the main part (16), and wherein the first surface of the collar (20) is adapted to abut the joining end (Ej) of the first portion (12) of the crossbar (1) along the longitudinal direction (Y).

4. Crossbar (1) according to any one of the preceding claims, wherein
- the joining part (18) comprises an outer surface (26) oriented towards the joining end (Ej) of the first crossbar (1),
- the joining end (Ej) of the first portion (12) of the crossbar (1) comprises an inner surface (28) oriented towards the joining part (18), and
wherein the outer surface of the joining part (18) is rough so as to grip the inner surface of the joining end (Ej) .

5. Crossbar (1) according to any one of the preceding claims, wherein the first portion (12) of the crossbar (1) comprises a first crossbar (1) end intended to be situated opposite a driver's seat of the vehicle, and wherein the second portion (14) of the crossbar (1) comprises a second crossbar (1) end intended to be situated opposite a passenger's seat of the vehicle.

6. Crossbar (1) according to any one of the preceding claims, wherein the first portion (12) of the crossbar (1) extends along the longitudinal direction (Y) over a distance of between 300 and 500 millimetres, wherein the second portion (14) of the crossbar (1) extends along the longitudinal direction (Y) over a distance of between 500 and 900 millimetres, and wherein the joining part (18) extends along the longitudinal direction (Y) over a distance of between 20 and 100 millimetres.

7. Crossbar (1) according to any one of the preceding claims, wherein the joining part comprises a conic shape, the base of the cone of the lowest diameter being oriented towards the main part (16), and wherein the joining end (Ej) of the first portion (12) of the crossbar (1) is mounted on the conic shape of the joining part (18).

8. Crossbar (1) according to any one of claims 1 to 6, wherein the joining part (18) is cylindrical, and wherein gripping grooves are provided on the outer surface of the joining part.

9. Crossbar (1) according to any one of the preceding claims, wherein the collar (20) extends along a collar (20) plane, normally the longitudinal direction (Y).

10. Crossbar (1) according to any one of the preceding claims, wherein a glue joint is arranged between the joining end (Ej) and the joining part (18).
